# EUROPÄISCHE PATENTSCHRIFT

(11) **EP 1 487 257 B1**
(45) Veröffentlichungstag und Bekanntmachung des Hinweises auf die Patenterteilung: **01.03.2006**
(21) Anmeldenummer: 03744828.9
(22) Anmeldetag: 20.03.2003
(51) Int. Cl.: A01K 1/12

(54) **VERFAHREN ZUM BETREIBEN EINER MELKANLAGE SOWIE MELKANLAGE**
METHOD FOR OPERATING A MILKING FACILITY, IN ADDITION TO CORRESPONDING MILKING FACILITY
PROCEDE PERMETTANT DE FAIRE FONCTIONNER UN DISPOSITIF DE TRAITE ET DISPOSITIF DE TRAITE

(30) Priorität: 22.03.2002 DE 10212676
(43) Veröffentlichungstag der Anmeldung: 22.12.2004
(73) Patentinhaber: WestfaliaSurge GmbH, 59199 Bönen (DE)
(72) Erfinder: HÖLSCHER, Frank, 33378 Rheda-Wiedenbrück (DE); SCHÖNROCK, Karsten, 58097 Hagen (DE); KAEVER, Peter, 59302 Oelde (DE)
(74) Vertreter: Neumann, Ditmar
(86) Internationale Anmeldenummer: PCT/EP2003/002936
(87) Internationale Veröffentlichungsnummer: WO 2003/079772

(56) Entgegenhaltungen:
- WO-A-00/74472
- WO-A-95/07019
- DE-A- 10 031 969
- DE-C- 19 936 909

## Beschreibung

Der Gegenstand der Erfindung bezieht sich auf ein Verfahren zum Betreiben einer Melkanlage sowie auf eine Melkanlage nach dem Oberbegriff des Patentanspruchs 11.

Obwohl im folgenden die Erfindung in Bezug auf die Verwendung in Karussell-Melkanlagen beschrieben wird, so wird darauf hingewiesen, dass eine erfindungsgemäße Melkanlage auch mit anderen beweglichen Transporteinrichtungen ausgerüstet sein kann. Das erfindungsgemäße Verfahren kann auch bei anderen Melkanlagen eingesetzt werden, so z.B. bei Melkanlagen, bei denen die zu melkenden Tiere auf Förderbändern angeordnet sind, um z.B. von dem Eingang zum Ausgang verfahren zu werden.

Weiterhin eignet sich die Erfindung nicht nur zur Verwendung an Melkanlagen zum Melken von Kühen, sondern auch zum Melken von anderen milchabgebenden Tieren, wie beispielsweise Stuten, Eseln, Ziegen, Schafen, Kamelen, Dromedaren, Yaks, Elchen und dergleichen mehr.

Zum Melken von Tieren, insbesondere zum Melken von Kühen, sind Karussell-Melkanlagen bekannt. Solche Karussell-Melkanlagen können unterschiedlicher Ausgestaltung sein. Durch die DE 26 50 741 A1 ist beispielsweise eine Karussell-Melkanlage bekannt, die mehrere Melkplätze aufweist, die auf einer Plattform angeordnet sind. Bei dieser Melkanlage handelt es sich um eine sogenannte side by side Karussell-Melkanlage. Die Tiere werden radial einwärts zu den Melkplätzen geführt. Hierzu wird ein Gatter, welches den Eintritt in den Melkplatz ermöglicht, nach oben gezogen. Nachdem die Kuh den Melkplatz betreten hat, wird das Gatter wieder heruntergefahren. Die Plattform mit den einzelnen Melkplätzen wird weiter verfahren.

Durch die DE 41 01 530 A1 ist eine weitere Ausgestaltung einer Karussell-Melkanlage bekannt. Diese weist eine drehbare Plattform auf, auf der mehrere Melkplätze angeordnet sind. Zum Antrieb der segmentiert ausgebildeten Plattform ist ein Antrieb vorgesehen, der durch einen oder mehrere Hydraulikmotoren und eine durch einen Elektromotor angetriebene Hydraulikpumpe gebildet ist.

Durch die WO 00/74472 ist ein Verfahren zum Betreiben einer Melkanlage mit wenigstens zwei Melkplätzen, die auf einer beweglichen Plattform angeordnet sind, bekannt. Zur Erfassung von Tieren in der Melkanlage werden nach der WO 00/74472 Detektoren verwendet.

Im Zuge der Automatisierung des Melkens sowie der Überwachung der Tiere bezüglich ihrer Milchleistung und Gesundheit ist bekannt, dass die Tiere mit einer Tiererkennungseinheit versehen sind. Die Tiererkennungseinheit kann eine Vielzahl von Informationen über das Tier enthalten.

Für eine sichere Zuordnung der während eines Melkvorgangs gewonnenen Daten zu einem Tier, ist die Kenntnis notwendig, auf welchem Melkplatz sich das Tier befindet. Die Positionserkennung kann beispielsweise durch Platzresponder realisiert werden. Die Platzresponder sind an den Melkplätzen der Anlage angeordnet. Eine Vorbeifahrantenne ortet die Platzresponder beim Vorbeifahren. Der Respondercode des Platzes wird an einen Rechner übermittelt und dem jeweiligen Platz zugeordnet.

Im Hinblick darauf, dass die Auflösung relativ gering ist, wurden zusätzliche Sensoren zur Erfassung gewisser kritischer Punkte angebaut, wobei es sich beispielsweise bei den Sensoren um Lichttaster handeln kann.

Eine solche Anordnung von Sensoren an kritischen Punkten ist durch die EP 0 717 590 B1 bekannt. Diese Sensoren bilden einen Teil einer Steuer- und Antriebseinrichtung für eine Karussell-Melkanlage. Nach der EP 0 717 590 B1 ist zur Überwachung der Melkzeugposition ein erster Kontrollpunkt vorgesehen. In Drehrichtung betrachtet, ist nach dem ersten Kontrollpunkt ein zweiter Kontrollpunkt angeordnet. Die Drehzahl der Plattform ist durch die Steuer- und Antriebseinrichtung so eingestellt, dass am ersten Kontrollpunkt die überwiegende Anzahl der Melkzeuge noch nicht abgezogen und am zweiten Kontrollpunkt die überwiegende Anzahl der Melkzeuge abgezogen ist.

Problematisch bei den bekannten Karussell-Melkanlagen ist, dass die Positionsbestimmung einzelner Melkplätze während des Betriebes einer Karussell-Melkanlage nur unzureichend oder mit einem sehr hohen technischen Aufwand ermöglicht wird.

Hiervon ausgehend liegt der vorliegenden Erfindung die Zielsetzung zugrunde, ein Verfahren zum Betreiben einer Melkanlage sowie eine Melkanlage anzugeben, durch das bzw. durch die eine (relativ genaue) Bestimmung der Position der Plattform während des Betriebes der Melkanlage möglich ist. Vorzugsweise soll der technische und apparative Aufwand zur Bestimmung der Position eines Melkstandes verringert werden.

Diese Aufgabe wird durch das Verfahren nach Anspruch 1 bzw. durch eine Melkanlage nach Anspruch 11 gelöst. Vorteilhafte Weiterbildungen und Ausgestaltungen des Verfahrens bzw. der Melkanlage sind Gegenstand der abhängigen Patentansprüche.

Das Verfahren zum Betreiben einer Melkanlage mit wenigstens einem, vorzugsweise wenigstens zwei oder auch einer Mehrzahl von Melkplätzen, die auf einer beweglichen (z.B. drehbaren) Plattform angeordnet sind, zeichnet sich dadurch aus, dass eine Ortsänderung der Plattform relativ zu einem Referenzpunkt durch eine Positionserfassungseinheit mittels wenigstens eines Winkelsensors bestimmt wird.

Die Erfindung hat viele Vorteile.

In einer bevorzugten Weiterbildung ist die Positionserfassungseinheit als zentrale Positionserfassungseinheit ausgeführt.

In einer bevorzugten Weiterbildung wird durch die (zentrale) Positionserfassungseinheit eine Winkeländerung erfasst.

In einer bevorzugten Weiterbildung wird das Verfahren zum Betreiben einer Karussellmelkanlage eingesetzt.

Unter anderem bietet die Erfindung den Vorteil, dass zu jeder Zeit, auch nach (längerer) Standzeit oder nach völligem Abschalten der Melkanlage die genaue Position der Anlage bekannt ist, ohne dass eine aufwendige Rekalibrierung erforderlich ist. Bei einer solchen Rekalibrierung wird in konventionellen Anlagen erst eine "Nullpunkt" gesucht, um dann über eine Zeit- und Geschwindigkeitsmessung den aktuellen Ort bzw. Winkel der Anlage abzuleiten.

In einer bevorzugten Weiterbildung der Erfindung oder einer der zuvor beschriebenen Weiterbildungen wird die Position wenigstens eines Melkplatzes ermittelt. Hierdurch wird die Möglichkeit geschaffen, durch die Bestimmung der Position wenigstens eines Melkplatzes diesen zu identifizieren. Da die Melkplätze auf der Plattform in einer vorgegebenen geometrischen Anordnung zueinander angeordnet sind, kann die Lage einzelner weiterer bzw. sämtlicher Melkplätze relativ zum Referenzpunkt bestimmt werden. Die Kenntnis der Position des wenigstens eines Melkplatzes relativ zu einem Referenzpunkt hat auch den Vorteil, dass sicher ermittelt werden kann, wieweit die Plattform nach einer Unterbrechung der Drehbewegung weitergedreht werden muss, um einem Tier das Betreten bzw. das Verlassen eines Melkplatzes zu ermöglichen.

In einer bevorzugten Weiterbildung der Erfindung oder einer der zuvor beschriebenen Weiterbildungen wird eine Winkelveränderung ermittelt. Dabei ist es bevorzugt, dass zur Ortsänderung die Winkelveränderung bzw. Winkeländerung erfasst wird. Möglich ist auch eine zusätzliche Erfassung oder Ermittlung einer Winkeländerung.

Durch die zentrale Positionserfassungseinheit wird auch eine erhöhte Sicherheit hinsichtlich der Bestimmung der Orts- oder auch Winkelveränderung erzielt, da nicht auf eine Vielzahl von Einrichtungen zur Bestimmung der Orts- bzw. Winkelveränderung zurückgegriffen werden muss. Darüber hinaus wird der apparative Aufwand zur Durchführung des Verfahrens verringert.

Gemäß einer vorteilhaften Weiterbildung wird vorgeschlagen, dass die Orts- bzw. Winkelgeschwindigkeit der Plattform ermittelt wird. Diese Weiterbildung des Verfahrens hat auch den Vorteil, dass eine sehr genaue Steuerung bzw. Regelung der (Winkel-) Geschwindigkeit der Plattform erreicht wird.

Insbesondere wird gemäß einer weiteren vorteilhaften Ausgestaltung des Verfahrens vorgeschlagen, dass die (Winkel-) Geschwindigkeit der Plattform in Abhängigkeit von der Betriebssituation an wenigstens einem Melkplatz veränderbar ist. Unter einer Betriebssituation wird ein jeder Zustand innerhalb des Melkkarussells verstanden. Die Betriebssituation kann beispielsweise durch die Anzahl der belegten Melkplätze, die Anzahl der noch stattfindenden oder bereits abgeschlossenen Melkvorgänge während einer Umdrehung der Plattform beschrieben werden. Hierbei kann es sich um eine Reduktion bzw. um eine Erhöhung der Winkelgeschwindigkeit handeln. Eine Reduktion der Winkelgeschwindigkeit der Plattform kann dann zweckmäßig sein, wenn die Melkzeit, die notwendig ist für die sich auf den Melkplätzen befindenden Kühe größer ist als die mögliche Verweilzeit einzelner Kühe auf der Plattform. Eine Erhöhung der Winkelgeschwindigkeit kann notwendig sein, wenn die Melkzeit, die notwendig ist um die sich auf der Plattform befindenden Tiere zu melken, geringer ist als die sich aus der aktuellen Winkelgeschwindigkeit ergebende Verweilzeit des Tieres während einer Verfahrstrecke zwischen dem Eingang und dem Ausgang:

Zur Bestimmung der Winkeländerung wird gemäß einer noch weiteren vorteilhaften Ausgestaltung des Verfahrens vorgeschlagen, dass wenigstens eine zentrale Einheit bzw. ein Winkelsensor vorgesehen ist, wobei die Daten des Winkelsensors einer Steuereinrichtung übermittelt werden. Die Steuereinrichtung kann zum Steuern und/oder Regeln dienen, also als Steuer- und/oder Regeleinrichtung ausgebildet sein.

Bei dem Winkelsensor handelt es sich vorzugsweise um Drehgeber. Hierbei können Absolut Drehgeber, aber auch Inkrementalgeber sowie Encoder verwendet werden. Anwendbar sind auch Multi-Turn-Drehgeber.

Bevorzugt wird die Winkeländerung mittels wenigstens eines Winkelcodierers, insbesondere mittels eines Absolut-Winkelcodierers gemessen. Bei dem Winkelcodierer kann es sich auch um einen Inkrementalwinkelcodierer handeln.

Die Winkelausgabe kann analog oder auch digital erfolgen. Winkelcodierer sind vorteilhaft, bei anlaogen Meßverfahren sind zeitliche Veränderungen des Signals möglich.

Denkbar ist auch ein z.B. optischer Sensor zur Positionserfassung. Beispielsweise kann auf dem Außenumfang eines Karussells eine periodische, wie z.B. sinusförmige oder sägezahnartige dünne Linie vorgesehen sein, wobei sich lokale Höhe der Linie und Winkel auf dem Karussell eindeutig zuordnen lassen. Durch Erfassung der Höhe der Linie mittels eines optischen, magnetischen oder sonstigen Sensors kann auch in einem solchen Fall im wesentlichen eindeutig eine Zuordnung des Winkels aus einem Messsignal erfolgen.

Bei der Erfindung bzw. diesen bevorzugten Weiterbildungen ist die Position der Anlage auch nach einem Stillstand, wie z.B. durch einen Stromausfall verursacht, bekannt, ohne dass ein Nullpunkt, Referenzpunkt oder dergleichen angefahren werden muss. Direkt nach Anschalten der Anlage ist der aktuelle Ort bzw. ein maß dafür aus dem Sensor abgreifbar. Er muss nicht anhand gespeicherter Daten aufwendig berechnet werden, sondern steht nach Ablesen des Sensors direkt zur Verfügung. Bei konventionellen Anlagen, bei denen mittels Responder eine Platzerkennung vorgesehen ist, muß nach einem Stillstand erst ein Referenzpunkt angefahren werden.

Um die Belegung des Melkplatzes mit einem Tier zu verifizieren, wird vorgeschlagen, dass eine Identifikation des sich am Melkplatz befindenden Tieres erfolgt. Hierbei kann die Identifikation des Tieres am Melkplatz selbst folgen. Zur Verringerung des technischen Aufwandes wird vorgeschlagen, dass die Identifikation des Tieres im Zugangsweg erfolgt.

Nach einem weiteren erfinderischen Gedanken wird eine Karussell-Melkanlage mit einer Mehrzahl von Melkplätzen, die auf einer beweglichen oder auch drehbaren Plattform angeordnet sind, vorgeschlagen. Die Melkanlage kann z.B. eine Karussell-Melkanlage sein und weist eine Positionserfassungseinheit oder auch zentrale Einrichtung mit wenigstens einem Winkelsensor auf, durch die eine Orts- oder auch Winkeländerung der Plattform relativ zu einem Referenzpunkt bestimmt.

Vorzugsweise wird die Position wenigstens eines Melkplatzes ermittelt. Die Positionserfassungseinheit oder auch zentrale Einrichtung weist vorzugsweise wenigstens einen Orts- oder auch Winkelsensor auf. Die Verwendung mehrerer (Winkel-) Sensoren hat den Vorteil, dass eine Redundanz erreicht wird. Hierdurch wird eine erhöhte Sicherheit hinsichtlich der Ermittlung der Stellung des Melkplatzes erzielt.

Gemäß einer vorteilhaften Ausgestaltung des Verfahrens kann der Referenzpunkt als Speichern der Positionsinformation in einer Referenzstellung des Karussells oder als physikalische Markierung verstanden werden, die sensorisch erfasst werden kann. Eine solche muss erfindungsgemäß nur bei der Erstinbetriebnahme zur Kalibrierung angefahren werden.

Eine Kalibrierung kann z.B. an einer Vorbeifahrantenne durchgeführt werden, die auch zur Platzerkennung der Tiere dienen kann. Eine solche Vorbeifahrantenne kann z.B. einen bestimmten Winkel nach dem Eingang z.B. eines Melk-Karussells vorgesehen sein, so dass die Zuordnung von Tier und Platz gesichert ist. Während eine solche Antenne normalerweise zur Tiererkennung eingesetzt wird, kann sie zusätzlich auch zu einer Überprüfung der Kalibrierung oder auch zu einer Plausibilitätskontrolle eingesetzt werden.

Gemäß einer vorteilhaften Weiterbildung der Karussell-Melkanlage wird vorgeschlagen, dass die Einrichtung mit der Plattform mittelbar oder unmittelbar verbunden ist. Die Verbindung kann mechanisch sein. Das ist jedoch nicht zwingend notwendig. Die Verbindung kann auch elektrisch und/oder optisch sein.

Nach einer noch weiteren vorteilhaften Ausgestaltung der (Karussell-) Melkanlage wird vorgeschlagen, dass die Einrichtung mit einer um die Drehachse der Plattform verdrehbaren Einheit oder Positionserfassungseinheit verbunden ist. Der Vorteil dieser Ausgestaltung der Karussell-Melkanlage kann darin gesehen werden, dass die Einrichtung an einer Komponente im Zentrum angeordnet ist, die sich mit der Plattform dreht, und somit eine Winkelbestimmung der Melkplätze erreicht wird.

Zum Antrieb einer (Karussell-) Melkanlage ist wenigstens eine Antriebseinheit vorgesehen. Die Einrichtung, durch die eine Orts- bzw. Winkeländerung der Plattform relativ zu einem Referenzpunkt bestimmt wird, kann alternativ oder zusätzlich mit einer Antriebseinheit verbunden sein.

Zur Erhöhung der Genauigkeit der Winkelbestimmung weist die Einrichtung vorzugsweise ein Getriebe auf. Bei dem Getriebe kann es sich um ein Über- oder Untersetzgetriebe handeln. Durch das Getriebe der Einrichtung wird auch eine Verbesserung der Aussagefähigkeit über die (Winkel-) Geschwindigkeit der Plattform erzielt.

Gemäß einer noch weiteren vorteilhaften Ausgestaltung der (Karussell-) Melkanlage wird vorgeschlagen, dass die Einrichtung mit einer Steuer- und/oder Regeleinrichtung verbunden ist. Hierdurch werden aktuelle Daten und die daraus resultierenden Positionen der Melkplätze an die Steuer- und/oder Regeleinrichtung übermittelt, wodurch die Steuer- und/oder Regeleinrichtung unterschiedliche Aktionen auslösen kann. Hierbei kann es sich beispielsweise um ein Stoppen des Karussells, Absenkung des Melkzeugs oder auch ein Hochziehen des Melkzeugs handeln. Des weiteren besteht die Möglichkeit, die Geschwindigkeit der Plattform in Abhängigkeit von der Belegung der Melkplätze zu variieren.

Gemäß einer noch weiteren vorteilhaften Ausgestaltung der (Karussell-) Melkanlage wird vorgeschlagen, dass die Identifikationsmittel zur Identifikation des sich am Melkplatz befindenden Tieres vorgesehen sind. Diese Identifikationsmittel sind so angeordnet, dass diese die Kuh am Melkplatz identifizieren. Zur Verringerung des technischen und apparativen Aufwandes wird die Anordnung der Identifikationsmittel im Zugangsweg vorgezogen.

Zur Bestimmung des Winkels und/oder der (Winkel-) Geschwindigkeit weist die Einrichtung vorzugsweise wenigstens einen Computer, insbesondere einen Mikrocomputer auf. In diesem findet die Auswertung der Positionserfassung statt. Durch die Verwendung eines Computers kann auch die Möglichkeit geschaffen werden, dem Bedienpersonal Informationen über die aktuelle (Winkel-) Geschwindigkeit bereitzustellen. Darüber hinaus können Daten von vorhergehenden Melkvorgängen, Betriebssituationen und Betriebsinformationen gespeichert werden, die abrufbar sind.

Die Steuer- und/oder Regeleinrichtung weist vorzugsweise einen Computer auf. Hierdurch wird eine präzise Positionsansteuerung und Regelung des Karussells ermöglicht. Die Informationen hinsichtlich der Position der Melkplätze können auch zur Erzeugung von Entscheidungen im automatisierten Ablauf oder Entscheidungshilfen, wenn ein manueller Zugriff möglich ist, für Abläufe im Melkkarussell sowie zur Anzeige von Statusinformationen verwendet werden.

Dadurch, dass die Einrichtung und/oder die Steuer- und/oder Regeleinrichtung einen Computer umfasst, können mittels geeigneter Verfahren Korrekturwerte zur Kompensation von mechanischen Unförmigkeiten herangezogen werden. Hierbei können entsprechende Korrekturtabellen zur Positionskorrektur berücksichtigt werden. Damit ist die Position am Umfang des Melkstandes bzw. des Karussells oder an anderen ausgewählten Punkten genau erfassbar, auch wenn Fertigungstoleranzen oder Ungenauigkeiten beim Aufbau der (Karussell-) Melkanlage bei einer zentralen Positions- oder Winkelerfassung zu Fehlern führen würde. Zur Erstellung der Kompensation können gleichfalls spezielle Marken verwendet werden, wobei deren Erfassung die automatische Einstellung der Kompensation unterstützt.

In einer bevorzugten Weiterbildung wird die aktuelle Leistungsaufnahme des Antriebs registriert. Vorzugsweise wird die aktuelle Leistungsaufnahme in Bezug zu charakteristischen Leistungsaufnahmen gesetzt. Eine charakteristische Leistungsaufnahme beschreibt dabei eine Leistungsaufnahme, die charakteristisch für den aktuellen Betriebszustand ist. Zur Bestimmung des charakteristischen Betriebszustand können unterschiedliche Informationen und Messwerte herangezogen werden.

In einem einfachen Fall werden z.B. dazu die aktuelle Drehgeschwindigkeit sowie etwaige Beschleunigungen oder Verzögerungen berücksichtigt. Auch die Berücksichtigung der Anzahl der Tiere auf der Plattform ist möglich.

Aus solchen Daten kann aus dem Vergleich der aktuellen Leistungsaufnahme mit der abgeleiteten charakteristischen Leistungsaufnahme ein Maß dafür abgeleitet werden, ob die aktuelle Leistungsaufnahme dem aktuellen Betriebszustand entspricht. Vorzugsweise wird die Geschwindigkeit nachgeregelt, d.h. die aktuelle Leistungsaufnahme derart angepasst, dass sich eine gewünschte Geschwindigkeit einstellt.

Wenn Abweichungen der aktuellen Leistungsaufnahme von der charakteristischen Leistungsaufnahme auftreten, die ein zulässiges Maß überschreiten (z.B. 20 oder auch 50 %), kann eine Warnmeldung ausgegeben werden. Ein Überschreiten kann z.B. auf eine Verschmutzung des Antriebssystems oder auch eine Leckage hindeuten. Somit ist mit dieser Weiterbildung der Erfindung auch ein Erkennen betriebsbedingter Einflüsse auf die Drehgeschwindigkeit möglich.

Weitere Einzelheiten und Vorteile des erfindungsgemäßen Verfahrens bzw. der erfindungsgemäßen Melkanlage werden anhand des in der Zeichnung dargestellten, bevorzugten Ausführungsbeispiels einer Karussell-Melkanlage erläutert.

Es zeigt:
- Fig. 1: Eine Karussell-Melkanlage in einer Draufsicht,
- Fig. 2: schematisch eine Zentraleinheit einer Karussell-Melkanlage,
- Fig. 3: schematisch und im Schnitt eine Karussell-Melkanlage mit einer Antriebseinheit und
- Fig. 4: schematisch ein Blockschaltbild

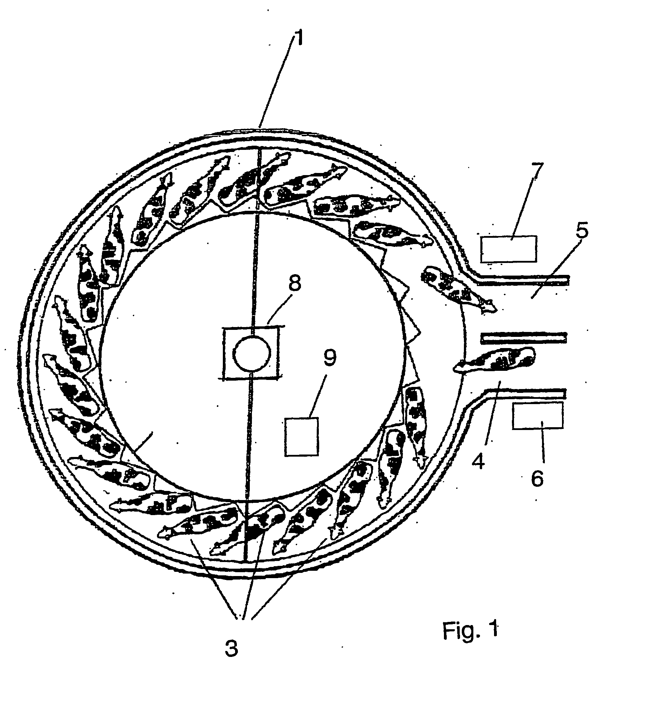

In der Figur 1 ist eine Karussell-Melkanlage 1 dargestellt. Die Karussell-Melkanlage weist eine ringförmige Plattform 2 auf. Auf der Plattform 2 ist eine Mehrzahl von Melkplätzen 3 ausgebildet. Die Melkplätze 3 sind voneinander getrennt ausgebildet.

In einem Zugangsweg 4 ist ein Identifikationsmittel 6 angeordnet, durch welches die Identifikation einer Kuh ermöglicht wird, wenn diese die Karussell-Melkanlage 1 betritt.

In einem Ausgang 5 ist eine Überwachungseinrichtung 7 angeordnet. Durch diese Überwachungseinrichtung 7 wird u.a. auch festgestellt, ob ein Tier, insbesondere eine Kuh, die Karussell-Melkanlage 1 verließ.

Im Zentrum der Karussell-Melkanlage 1 ist eine zentrale Positionserfassungseinheit 8, 15 angeordnet, die um eine Drehachse der Plattform 2 verdrehbar ist. Die Einheit 8 sowie die Plattform 2 sind derart miteinander gekoppelt, dass diese synchron miteinander verdreht werden. Die Drehrichtung der Plattform 2 sowie der Einheit 8 ist durch den Pfeil in der Figur 1 dargestellt.

Zum Bedienen der Karussell-Melkanlage 1 ist in einem Zentrumsbereich, der durch eine Bedienperson betretbar ist, ein Bedienpult 9 angeordnet. Das Bedienpult 9 kann auch Anzeigegeräte und Instrumente enthalten, aus denen die aktuelle Melksituation an einzelnen Melkplätzen abrufbar ist. Des weiteren kann an dem Bedienpult 9 der aktuelle Status der Melkanlage überprüft werden.

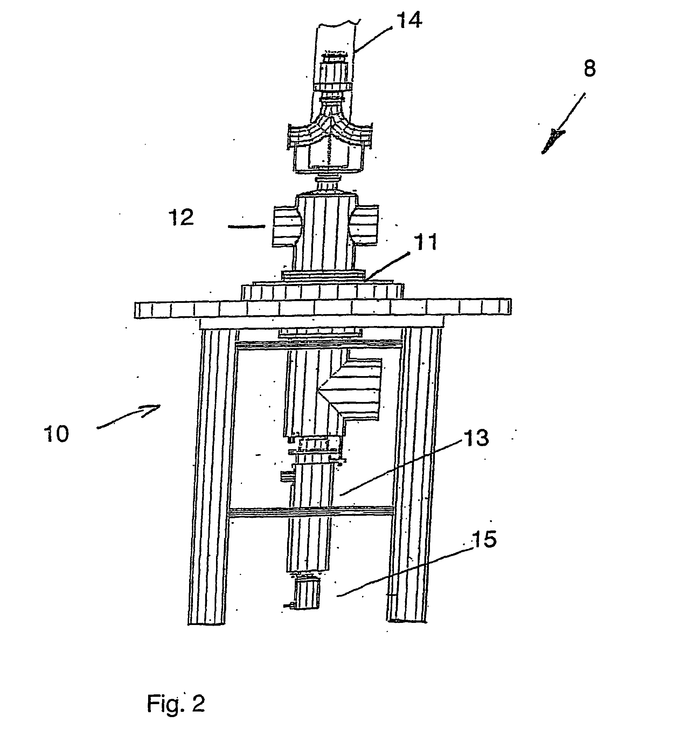

Figur 2 zeigt ein Ausführungsbeispiel der Einheit 8. Die Einheit 8 weist ein ortsfest angeordnetes Gestell 10 auf. Das Gestell 10 weist eine Radiallagerung 11 auf, die zur Lagerung einer Versorgungseinheit 14 dient. Die Versorgungseinheit 14 ist im wesentlichen rohrförmig ausgebildet, die koaxial zur Drehachse der Karussell-Melkanlage angeordnet ist. Innerhalb der Versorgungseinheit 14 werden die zum Betrieb der Karussell-Melkanlage notwendigen Zu- und Ableitungen geführt.

Mit den Bezugszeichen 14 ist auch eine Vakuumdrehkupplung bezeichnet. Unterhalb der Radiallagerung 11 ist ein Schleifringübertrager 13 angeordnet.

Zur Bestimmung einer Winkeländerung der Plattform 2 relativ zu einem Referenzpunkt ist eine Einrichtung 15 vorgesehen, die mit der Versorgungseinheit 14 verbunden ist. Die Einrichtung 15 umfasst wenigstens einen Winkelsensor; so dass die Winkeländerung der Plattform 2 und somit die Position wenigstens eines Melkplatzes 3 ermittelt wird.

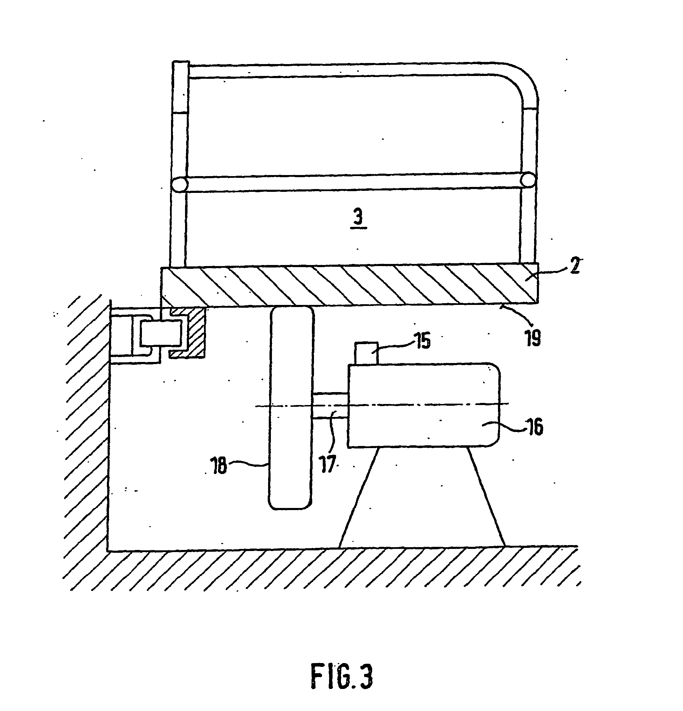

Alternativ oder zusätzlich kann die Einrichtung 15 an einer Antriebseinheit 16 angeordnet sein, wie dieses aus der Figur 3 ersichtlich ist. In dem Ausführungsbeispiel nach Figur 3 handelt es sich bei der Antriebseinheit 16 um einen Elektromotor, der eine Antriebswelle 17 aufweist. Mit der Antriebswelle 17 ist ein Reibrad verbunden. Das Reibrad greift an der Unterseite 19 der Plattform 2 an. Zur Verringerung eines Schlupfes zwischen dem Reibrad 18 und der Unterseite 19 der Plattform 2 kann die Unterseite 19 mit einer Beschichtung versehen sein, die einen hohen Reibungskoeffizienten aufweist. Die in der Figur 3 dargestellte. Antriebseinheit 6 stellt eine beispielhafte Ausgestaltung einer Antriebseinheit für eine Karussell-Melkanlage dar. Es besteht auch die Möglichkeit, die Plattform 2 durch Hydraulikmotoren anzutreiben. Diese Hydraulikmotoren werden von einer durch einen Elektromotor angetriebenen Hydraulikpumpe versorgt.

Die erfindungsgemäße Karussell-Melkanlage bietet hier den Vorteil, dass die Nahteile im Stand der Technik überwunden werden. Im Stand der Technik ist bei Verwendung von Reibrädern die Position eines Karussells durch den Schlupf zwischen Antriebsmittel und Karussell nicht genau bekannt. Auch einer unterschiedlicher Luftdruck in den Antriebsreibrädern führt zu ungenauer Positionskenntnis. Hier bietet die Erfindung erhebliche Vorteile.

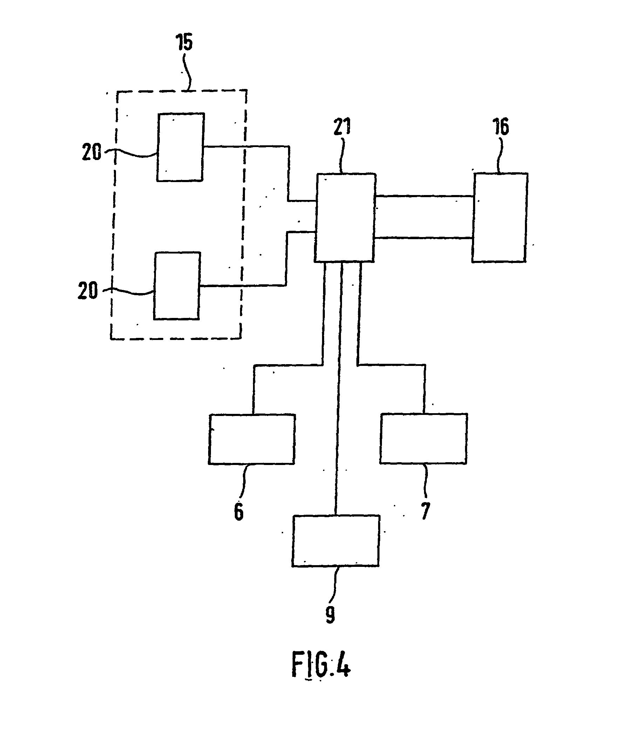

In der Figur 4 ist schematisch ein Blockschaltbild dargestellt. Die Einrichtung 15 weist zwei Winkelsensoren 20 auf. Die Winkelsensoren 20 sind über Signalleitungen mit einer Steuer- und/oder Regeleinrichtung 21 verbunden. Mit der Steuer- und/oder Regeleinrichtung 21 sind auch das Identifikationsmittel 6 und die Überwachungseinrichtung 7 verbunden.

Zur Steuerung der Winkelgeschwindigkeit der Plattform 2 ist die Steuer- und/oder Regeleinrichtung 21 mit der Antriebseinheit 16 verbunden.

### Bezugszeichenliste

- 1: Karussell-Melkanlage
- 2: Plattform
- 3: Melkplatz
- 4: Zugangsweg
- 5: Ausgang
- 6: Identifikationsmittel
- 7: Überwachungseinrichtung
- 8: Einheit
- 9: Bedienpult
- 10: Gestell
- 11: Radiallager
- 12: Vakuumdrehkupplung
- 13: Schleifringübertrager
- 14: Versorgungseinheit
- 15: Einrichtung
- 16: Antriebseinheit
- 17: Antriebswelle
- 18: Treibrad
- 19: Unterfläche
- 20: Winkelsensor
- 21: Steuer- und Regeleinrichtung

## Patentansprüche

1. Verfahren zum Betreiben einer Melkanlage (1) mit wenigstens zwei Melkplätzen (3), die auf einer beweglichen Plattform (2) angeordnet sind, bei dem eine Ortsänderung der Plattform (2) durch eine Positionserfassungseinheit (8, 15) mittels wenigstens eines Winkelsensors (20) relativ zu einem Referenzpunkt bestimmt wird.

2. Verfahren nach Anspruch 1, bei dem die Position wenigstens eines Melkplatzes (3) ermittelt wird.

3. Verfahren nach Anspruch 1 oder 2, bei dem eine Geschwindigkeit der Plattform (2) ermittelt wird.

4. Verfahren nach Anspruch 3, bei dem die Geschwindigkeit in Abhängigkeit von der Betriebssituation an wenigstens einem Melkplatz (3) veränderbar ist.

5. Verfahren nach mindestens einem der vorhergehenden Ansprüche, bei dem die Örtsänderung einer Winkeländerung entspricht.

6. Verfahren nach mindestens einem der vorhergehenden Ansprüche, bei dem der Sensor einer Gruppe von Sensoren entnommen ist, welche Winkelcodierer, absolute Winkelcodierer, inkrementale Winkelcodierer, Winkelencoder, Drehgeber und dergleichen mehr umfasst.

7. Verfahren nach mindestens einem der vorhergehenden Ansprüche, bei dem die gemessenen Daten einer Steuereinrichtung (21) übermittelt werden.

8. Verfahren nach mindestens einem der vorhergehenden Ansprüche, bei dem die Belegung eines Melkplatzes (3) durch eine Identifikation des sich am Melkplatz (3) befindenden Tieres erfolgt.

9. Verfahren nach Anspruch 8, bei dem die Identifikation des Tieres am Melkplatz (3) und/oder im Zugangsweg (4) erfolgt.

10. Verfahren nach mindestens einem der vorhergehenden Ansprüche, wobei das Verfahren zum Betreiben einer Karussell-Melkanlage eingesetzt wird.

11. Melkanlage mit einer Mehrzahl von Melkplätzen (3), die auf einer beweglichen Plattform (2) angeordnet sind, **gekennzeichnet durch** eine Ortserfassungseinrichtung (15) mit wenigstens einem Winkelsensor (20), **durch** die eine Ortsänderung der Plattform (2) relativ zu einem Referenzpunkt bestimmt wird.

12. Melkanlage nach Anspruch 11, **dadurch gekennzeichnet, dass** die Ortserfassungseinrichtung (15) eine zentrale Ortserfassungseinrichtung (15) ist.

13. Melkanlage nach Anspruch 11 oder 12, **dadurch gekennzeichnet, dass** der Sensor einer Gruppe von Sensoren entnommen ist, welche absolute Winkelcodierer, inkrementale Winkelcodierer, Winkelencoder und dergleichen mehr umfasst.

14. Melkanlage nach mindestens einem der Ansprüche 11 bis 13, **dadurch gekennzeichnet, dass** die Ortserfassungseinrichtung (15) mit der Plattform (2) mittelbar oder unmittelbar verbunden ist.

15. Melkanlage nach mindestens einem der Ansprüche 11 bis 14, **dadurch gekennzeichnet, dass** diese eine um die Drehachse der Plattform (2) verdrehbare Einheit (8) aufweist, wobei die Ortserfassungseinrichtung (15) mit der verdrehbaren Einheit (8) verbunden ist.

16. Melkanlage nach mindestens einem der Ansprüche 11 bis 15, **dadurch gekennzeichnet, dass** diese wenigstens eine Antriebseinheit (16) aufweist, wobei die Ortserfassungseinrichtung (15) mit der wenigstens einen Antriebseinheit (16) verbunden ist.

17. Melkanlage nach mindestens einem der Ansprüche 11 bis 16, **dadurch gekennzeichnet, dass** die Ortserfassungseinrichtung (15) ein Getriebe aufweist.

18. Melkanlage nach mindestens einem der Ansprüche 11 bis 17, **dadurch gekennzeichnet, dass** eine Steuereinrichtung (21) vorgesehen ist, welche vorzugsweise einen Computer umfasst.

19. Melkanlage nach Anspruch 18, **dadurch gekennzeichnet, dass** die Ortserfassungseinrichtung (15) mit der Steuereinrichtung (21) verbunden ist.

20. Melkanlage nach Anspruch 18 oder 19, **dadurch gekennzeichnet, dass** die wenigstens eine Antriebseinheit (16) mit der Steuereinrichtung (21) verbunden ist.

21. Melkanlage nach mindestens einem der Ansprüche 11 bis 20, **dadurch gekennzeichnet, dass** Identifikationsmittel (6) zur Identifikation des sich am Melkplatz (3) befindenden Tieres vorgesehen sind.

22. Melkanlage nach Anspruch 21, **dadurch gekennzeichnet, dass** die Identifikationsmittel am Melkplatz und/oder im Zugangsweg (4) vorgesehen sind.

## Claims

1. Method for operating a milking installation (1) with at least two milking stations (3), arranged on a movable platform (2), in which a change of position of the platform (2) is determined relative to a reference point by means of a position detection unit (8, 15) with the aid of at least one angle sensor (20).

2. Method according to claim 1, in which the position of at least one milking station (3) is determined.

3. Method according to claim 1 or 2, in which a velocity of the platform (2) is determined.

4. Method according to claim 3, in which the velocity can be altered as a function of the operational situation in at least one milking station (3).

5. Method according to at least one of the previous claims, in which the change of position corresponds to an angular change.

6. Method according to at least one of the previous claims, in which the sensor is taken from a group of sensors, which include angle coder, absolute angle coder, incremental angle coder, angle encoder, shaft encoder or similar others.

7. Method according to at least one of the previous claims, in which the measured data are transmitted to a control device (21).

8. Method according to at least one of the previous claims, in which the occupation of a milking station (3) is done by an identification of the animal located at the milking station (3).

9. Method according to claim 8, in which the identification of the animal is done at the milking station (3) and/or in the access path (4).

10. Method according to at least one of the previous claims, wherein the method is used for the operation of a carousel milking installation.

11. Milking installation with a plurality of milking stations (3), which are arranged on a movable platform (2), **characterized by** a position detection device (15) with at least one angle sensor (20) through which a change of position of the platform (2) relative to the reference point is determined.

12. Milking installation according to claim 11, **characterized in that** the position detection device (15) is a central position detection device (15).

13. Milking installation according to claim 11 or 12, **characterized in that** the sensor is taken from a group of sensors, which include absolute angle coder, incremental angle coder, angle encoder, or similar others.

14. Milking installation according to at least one of claims 11 to 13, **characterized in that** the position detection device (15) is connected to the platform (2) indirectly or directly.

15. Milking installation according to at least one of claims 11 to 14, **characterized in that** this has a unit (8), which can be rotated around the axis of rotation of the platform (2), whereby the position detection device (15) is connected to the rotatable unit (8).

16. Milking installation according to at least one of claims 11 to 15, **characterized in that** this has at least one drive unit (16), wherein the position detection device (15) is connected to the at least one drive unit (16).

17. Milking installation according to at least one of claims 11 to 16, **characterized in that** the position detection device (15) has a gear.

18. Milking installation according to at least one of claims 11 to 17, **characterized in that** a control device (21) is provided, which preferably includes a computer.

19. Milking installation according to claim 18, **characterized in that** the position detection device (15) is connected to the control unit (21).

20. Milking installation according to claim 18 or 19, **characterized in that** the at least one drive unit (16) is connected to the control unit (21).

21. Milking installation according to one of claims 11 to 20, **characterized in that** identification means (6) are provided for identification of the animal located at the milking station (3).

22. Milking installation according to claim 21, **characterized in that** the identification means are provided at the milking station and/or in the access path (4).

## Revendications

1. Procédé pour opérer une installation de traite (1) avec au moins deux postes de traite (3) qui sont agencés sur une plateforme amovible (2), dans lequel un changement de position de la plateforme (2) est déterminé relativement à un point de référence au moyen d'une unité de détection de position (8, 15) à l'aide d'au moins un capteur d'angle (20).

2. Procédé selon la revendication 1, dans lequel la position d'au moins un poste de traite (3) est déterminée.

3. Procédé selon la revendication 1 ou 2, dans lequel une vitesse de la plateforme (2) est déterminée.

4. Procédé selon la revendication 3, dans lequel la vitesse peut être modifiée en fonction de la situation opérationnelle dans au moins un poste de traite (3).

5. Procédé selon au moins une des revendications précédentes, dans lequel le changement de position correspond à un changement d'angle.

6. Procédé selon au moins une des revendications précédentes, dans lequel le capteur est prélevé d'un groupe de capteurs qui comporte des codeurs angulaires, des codeurs angulaires absolus, des codeurs angulaires incrémentiels, des encodeurs angulaires, des résolveurs et d'autres choses semblables.

7. Procédé selon au moins une des revendications précédentes, dans lequel les données mesurées sont transmises à un dispositif de commande (21).

8. Procédé selon au moins une des revendications précédentes, dans lequel l'occupation d'un poste de traite (3) est effectuée par une identification de l'animal se trouvant dans le poste de traite (3).

9. Procédé selon la revendication 8, dans lequel l'identification de l'animal est effectuée dans le poste de traite (3) et/ou dans la voie d'accès (4).

10. Procédé selon au moins une des revendications précédentes, où l'on utilise le procédé pour opérer un manège de traite.

11. Installation de traite avec une pluralité de postes de traite (3) qui sont agencés sur une plateforme amovible (2), **caractérisée par** un dispositif de détection de position (15) avec au moins un capteur d'angle (20) par lequel on détermine un changement de position de la plateforme (2) relativement à un point de référence.

12. Installation de traite selon la revendication 11, **caractérisée en ce que** le dispositif de détection de position (15) est un dispositif de détection de position central (15).

13. Installation de traite selon la revendication 11 ou 12, **caractérisée en ce que** le capteur est prélevé d'un groupe de capteurs qui comporte des codeurs angulaires absolus, des codeurs angulaires incrémentiels, des encodeurs angulaires et d'autres choses semblables.

14. Installation de traite selon au moins une des revendications 11 à 13, **caractérisée en ce que** le dispositif de détection de position (15) est relié indirectement ou directement à la plateforme (2).

15. Installation de traite selon au moins une des revendications 11 à 14, **caractérisée en ce que** celle-ci a une unité (8) qui peut être tournée autour de l'axe de rotation de la plateforme (2), le dispositif de détection de position (15) étant relié à l'unité (8) pouvant être tournée.

16. Installation de traite selon au moins une des revendications 11 à 15, **caractérisée en ce que** celle-ci a au moins une unité d'entraînement (16), le dispositif de détection de position (15) étant relié à l'au moins une unité d'entraînement (16).

17. Installation de traite selon au moins une des revendications 11 à 16, **caractérisée en ce que** le dispositif de détection de position (15) a un engrenage.

18. Installation de traite selon au moins une des revendications 11 à 17, **caractérisée en ce qu'**un dispositif de commande (21) est prévu qui comporte de préférence un ordinateur.

19. Installation de traite selon la revendication 18, **caractérisée en ce que** le dispositif de détection de position (15) est relié au dispositif de commande (21).

20. Installation de traite selon la revendication 18 ou 19, **caractérisée en ce que** l'au moins une unité d'entraînement (16) est reliée au dispositif de commande (21).

21. Installation de traite selon au moins une des revendications 11 à 20, **caractérisée en ce que** des moyens d'identification (6) sont prévus pour l'identification de l'animal se trouvant dans le poste de traite (3).

22. Installation de traite selon la revendication 21, **caractérisée en ce que** les moyens d'identification sont prévus dans le poste de traite et/ou dans la voie d'accès (4).
